# EUROPÄISCHE PATENTANMELDUNG

(11) **EP 0 848 194 A2**
(43) Veröffentlichungstag der Anmeldung: **17.06.1998**
(21) Anmeldenummer: 97890207.0
(22) Anmeldetag: 16.10.1997
(51) Int. Cl.: F16K 11/044, F16K 31/122

(54) **Dreiwegeventil**

(30) Priorität: 12.12.1996 AT 2169/96
(71) Anmelder: Weissenbacher, Andreas, 5324 Hintersee (AT); Oberhauser, Ernst, 5440 Golling (AT)
(72) Erfinder: Weissenbacher, Andreas, 5324 Hintersee (AT); Oberhauser, Ernst, 5440 Golling (AT); Mairhofer, Anton, 4893 Zell am Moos (AT)
(74) Vertreter: Atzwanger, Richard, Dipl.-Ing. Patentanwalt

(57) **Zusammenfassung**

Dreiwegeventil bestehend aus einem Gehäuse (1), welches mit drei Anschlußstutzen (2, 3, 4) ausgebildet ist und in welchem sich ein Ventilkörper (8) befindet, welcher gegenüber zwei Ventilsitzen verstellbar ist, wobei durch dessen Verstellung die durch einen ersten Anschlußstutzen [2] gebildete Leitung mit zumindest einer der durch die beiden anderen Anschlußstutzen (3, 4) gebildeten Leitungen verbindbar ist. Dabei ist der Ventilkörper als Hohlkörper (8) ausgebildet, welcher längs einer Führungsschiene [6] verstellbar ist und dessen Innenraum mittels einer fest angeordneten Trennwand [7] in zwei Bereiche [80a, 80b] unterteilt ist, in welche Leitungen [62, 63] für ein Druckmedium münden, wobei der Hohlkörper [8] durch Zufuhr von Druckmedium in einen der beiden Teilbereiche [80a, 80b] längs der Führungsschiene [6] gegenüber den Ventilsitzen verstellbar ist [Fig. 1].

## Beschreibung

Die gegenständliche Erfindung betrifft ein Dreiwegeventil bestehend aus einem Gehäuse, welches mit drei Anschlußstutzen ausgebildet ist und in welchem sich ein Ventilkörper befindet, welcher gegenüber zwei Ventilsitzen verstellbar ist, wobei durch dessen Verstellung die durch einen ersten Anschlußstutzen gebildete Leitung mit zumindest einer der beiden durch die anderen Anschlußstutzen gebildeten Leitungen verbindbar ist.

Es sind Dreiwegeventile bekannt, welche aus einem Gehäuse bestehen, welches mit drei Anschlußstutzen ausgebildet ist, wobei sich im Innenraum dieses Gehäuses ein Ventilkörper befindet, welcher gegenüber zwei Ventilsitzen verstellbar ist. Soferne durch einen der Anschlußstutzen hindurch ein Medium, z.B. Wasser, zugeführt wird, wird es in Abhängigkeit von der Stellung des Ventilkörpers entweder zu einem der beiden anderen Anschlußstutzen oder zu beiden anderen Anschlußstutzen geleitet, wobei die Anteile an Medium, welche den beiden Anschlußstutzen zugeführt werden, regelbar sind.

Derartige Dreiwegeventile werden z.B. in Wasseraufbereitungsanlagen verwendet, in welchen das zuströmende Wasser einer ersten Enthärtungsanlage oder einer ersten Filteranlage zugeführt wird, währenddessen eine zweite Anlage regeneriert oder gereinigt wird, worauf eine Umschaltung der Zufuhr des Wassers zur zweiten Anlage erfolgt. In analoger Weise werden derartige Dreiwegenventile in Schwimmbadanlagen verwendet, in welchen das Wasser aufbereitet bzw. gereinigt bzw. verschmutztes Wasser in Abwasserkanäle eingeleitet wird. Auch dabei besteht das Erfordernis, zuströmendes Wasser in unterschiedliche Kanäle einzuleiten.
Analoge Aufgaben bestehen auch in industriellen Anlagen, in welchen Dreiwegeventile zur Steuerung der Zufuhr von flüssigen Medien in unterschiedliche Verarbeitungsbereiche erforderlich sind.

Bei bekannten derartigen Dreiwegeventilen ist der Ventilkörper durch eine Kugel gebildet, welche mittels eines Stellmotors über ein Getriebe zwischen den beiden Ventilsitzen verstellbar ist. Aufgrund des großen Gewichtes dieser Ventilkugel und der im Ventilgehäuse auftretenden Kräfte ist jedoch der Einsatz derartiger Ventile auf Leitungen mit einem Durchmesser von etwa 80 mm beschränkt. Soferne demnach Anlagen, welche diesen Durchmesser überschreitende Leitungen enthalten, betroffen sind, besteht das Erfordernis, zwei Abzweigungen mit jeweils einem einfachen Ventil vorzusehen. Da hierdurch zwei Ventile mit jeweils zwei Stellmotoren und diesen zugeordneten Getrieben benötigt werden, wird jedoch hierdurch ein sehr hoher technischer und finanzieller Aufwand bedingt.

Der gegenständlichen Erfindung liegt demnach die Aufgabe zugrunde, ein Dreiwegeventil zu schaffen, welches bei beliebigen, also auch sehr großen Dimensionen funktionsfähig ist, wodurch bei Anlagen, in welchen große Mengen an flüssigen Medien bearbeitet bzw. verarbeitet werden, maßgebliche Einsparungen erzielten werden können. Dies wird erfindungsgemäß dadurch erzielt, daß der Ventilkörper als Hohlkörper ausgebildet ist, welcher längs einer Führungsschiene verstellbar ist und dessen Innenraum mittels einer fest angeordneten Trennwand in zwei Teilbereiche unterteilt ist, in welchen Teilbereichen jeweils Leitungen für ein Druckmedium münden, wobei durch Zufuhr von Druckmedium in einen der beiden Teilbereiche der Hohlkörper längs der Führungsschiene gegenüber den Ventilsitzen verstellbar ist.

Vorzugsweise ist der Hohlkörper als an seinen beiden axialen Enden durch Deckwände verschlossener Hohlzylinder ausgebildet. Weiters ist vorzugsweise die Führungsschiene als insbesondere zylindrische Stange ausgebildet, welche den Hohlkörper in gegenüber der Stange abgedichteten Öffnungen durchsetzt. Dabei durchsetzt die Führungsschiene, insbesondere die zylindrische Führungsstange, den zylindrischen Hohlkörper in axialer Richtung.
Nach weiteren bevorzugten Merkmalen ist die Trennwand an der Führungsschiene befestigt, wobei sie insbesondere als kreisrunde Scheibe ausgebildet ist, welche an ihrem Umfang mit einer Dichtung ausgebildet ist, die an die Innenwand des insbesondere zylindrischen Hohlkörpers anliegt.

Vorzugsweise sind die Leitungen für die Zufuhr des Druckmediums in die Teilbereiche des Innenraumes in der Führungsschiene angeordnet. Insbesondere ist die Führungsschiene von in den Ventilöffnungen angeordneten Speichen getragen und sind die Leitungen für das Druckmedium in jeweils einer der Speichen angeordnet, wobei sie in die in der Führungsschiene befindlichen Leitungen übergehen. Hierfür sind jeweils eine der Speichen und die Führungsschiene mit aneinander anschließenden Bohrungen ausgebildet, über welche das Druckmedium mittels eines Steuerventiles jeweils einem der beiden Teilbereiche zuführbar ist.

Nach einer weiteren bevorzugten Ausführungsform ist in einem der Teilbereiche des Innenraumes des Hohlkörpers eine Rückstellfeder angeordnet, wodurch der Ventilkörper dann, wenn kein des Druckmedium zugeführt wird, in eine seiner beiden Endlagen verstellbar ist. Weiters ist vorzugsweise die Beaufschlagung der Leitungen zur Zufuhr des Druckmediums in einen der beiden Teilbereiche mittels eines Steuerventiles bewirkbar. Das Druckmedium ist insbesondere durch Druckluft oder durch Wasser gebildet.

Gemäß einer bevorzugten Ausführungsform sind die Ventilöffnungen der beiden weiteren Anschlußstutzen mit einer Mehrzahl von Speichen ausgebildet, von deren mittig angeordneten Naben die Führungsstange getragen ist, ist die Trennwand an der Führungsstange befestigt, sind die beiden Abschlußwände des zylindrischen Hohlkörpers von der Führungsstange gegenüber dem Druckmedium abgedichtet durchsetzt und ist das Druckmedium über in jeweils einer der Speichen und in der Führungsstange angeordnete Leitungen in die durch die Trennwand gebildeten beiden Teilbereiche des Hohlraumes einleitbar, wodurch der Hohlkörper gegenüber den beiden Ventilsitzen verstellbar ist.

Der Gegenstand der Erfindung ist nachstehend anhand eines in der Zeichnung dargestellten Ausführungsbeispieles näher erläutert. Es zeigen:
- Fig. 1: ein erfindungsgemäßes Ventil, in einer ersten Stellung des Ventilkörpers, in axialem Mittelschnitt,
- Fig. 2: das Ventil gemäß Fig. 1, in einer zweiten Stellung des Ventilkörpers, in axialem Mittelschnitt,
- Fig. 3: eine Ausführungsvariante eines erfindungsgemäßen Ventils, in der ersten Stellung des Ventilkörpers, in axialem Mittelschnitt,
- Fig. 4: die Ausführungsvariante, gemäß Fig.3, in der zweiten Stellung des Ventilkörpers, in axialem Mittelschnitt, und

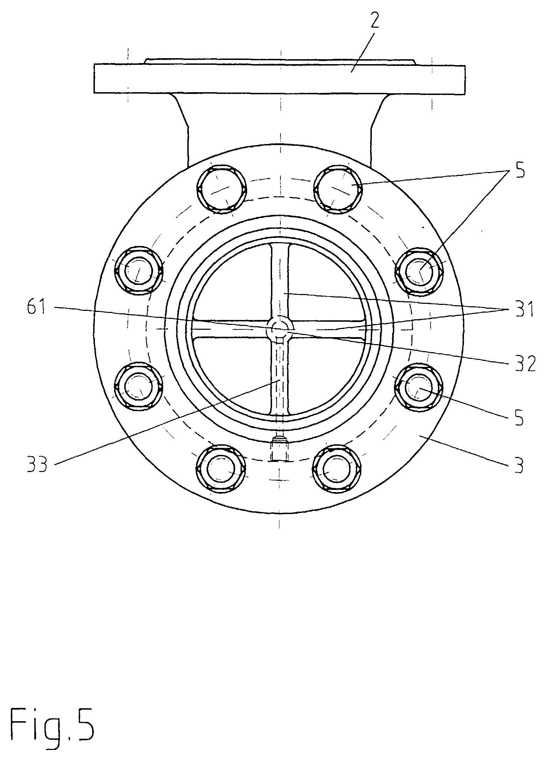

- Fig. 5: die Ventile gemäß den Fig. 1 bis 4, in Seitenansicht.

Ein erfindungsgemäßes Ventil besteht aus einem zylindrischen Gehäuse 1, welches mit drei Anschlußstutzen 2, 3 und 4 ausgebildet ist. Der Anschlußstutzen 2 ist mit dem Gehäuse 1 fix verbunden, wogegen die Anschlußstutzen 3 und 4 an das Gehäuse 1 angeflanscht sind. Das Gehäuse 1 ist durch ein zylindrisches Rohrstück 11 gebildet, an dessen Mantelfläche der Anschlußstutzen 2 angesetzt ist. Dabei kann das Gehäuse 1 durch ein in der Armaturentechnik übliches T-Stück gebildet sein. An die beiden Stirnflächen des Rohrstückes 11 sind kreisförmige Deckplatten 13 und 14 angesetzt, welche mittels einer Mehrzahl von Zugbolzen 5 miteinander verbunden und auf das Rohrstück 11 aufgespannt sind. An die beiden Deckplatten 13 und 14 sind die Rohrstücke 3 und 4 angeflanscht.

In ihren mittleren Bereichen sind die Deckplatten 13 und 14 mit Ausnehmungen ausgebildet, welche von vier Speichen 31 und 41 durchsetzt sind. Von den Naben 32 und 42 der Speichen 31 und 41 ist eine Stange 6 getragen, welche den Hohlraum 10 des Gehäuses 1 axial durchsetzt und auf welcher eine starr befestigte Dichtungsscheibe 7 angeordnet ist. Die Dichtungsscheibe 7 ist von einem an seinen beiden Enden verschlossenen, hohlzylindrischen Ventilkörper 8 umgeben.

Der Ventilkörper 8 ist auf der Stange 6 gelagert und gegenüber dieser bzw. gegenüber der Dichtungsscheibe 7 verstellbar. Hierfür sind die beiden Abschlußkappen 81 und 82 des Ventilkörpers 8 mit zentrischen Bohrungen ausgebildet, welche von der Stange 7 durchsetzt sind, wobei in diesen Bohrungen der Abdichtung dienende Ringdichtungen 83 und 84 vorgesehen sind. Die Deckplatten 13 und 14 sind an deren Innenseiten mit Ringflächen 15 und 16 für zugeordnete Lagerflächen des Ventilkörpers 8, welche mit Ringdichtungen 85 und 86 versehen sind, ausgebildet. Zudem ist die Dichtungsscheibe 7 an ihrem Umfang mit einem Dichtungsring 71 ausgebildet, welcher an die Innenflächen des Ventilkörpers 8 anliegt.

Jeweils eine der Speichen 31 bzw. 41 ist mit einem Kanal 33 bzw. 43 ausgebildet, welche jeweils in Kanäle 61 und 63 übergehen, die in der Stange 6 vorgesehen sind. Diese Kanäle 61 und 63 münden mittels Querkanälen 62 und 64 in den beiden Innenräumen 80a und 80b des Ventilkörpers 8, welche durch die Scheibe 7 voneinander getrennt sind. Die Kanäle 33 und 43 sind über Leitungen 91 und 92 an ein Steuerventil 9 angeschlossen.

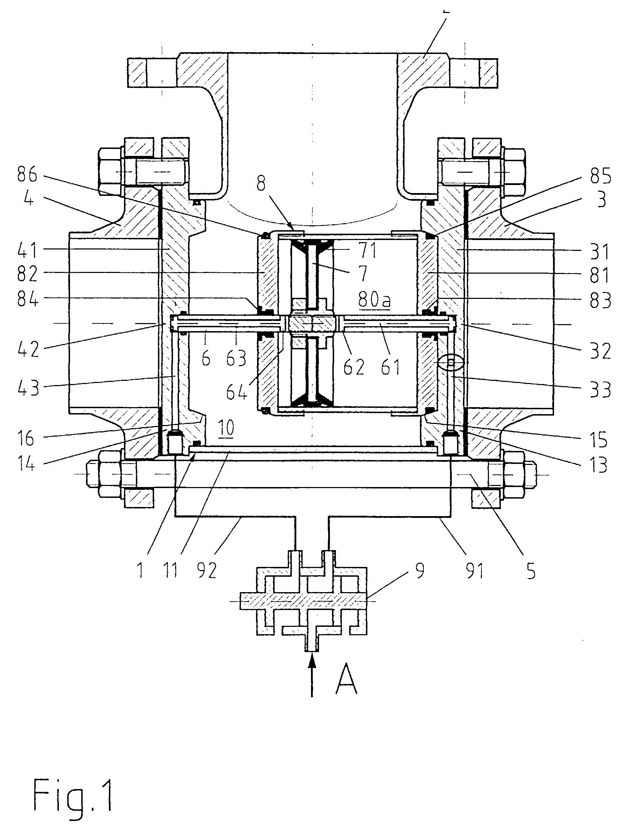

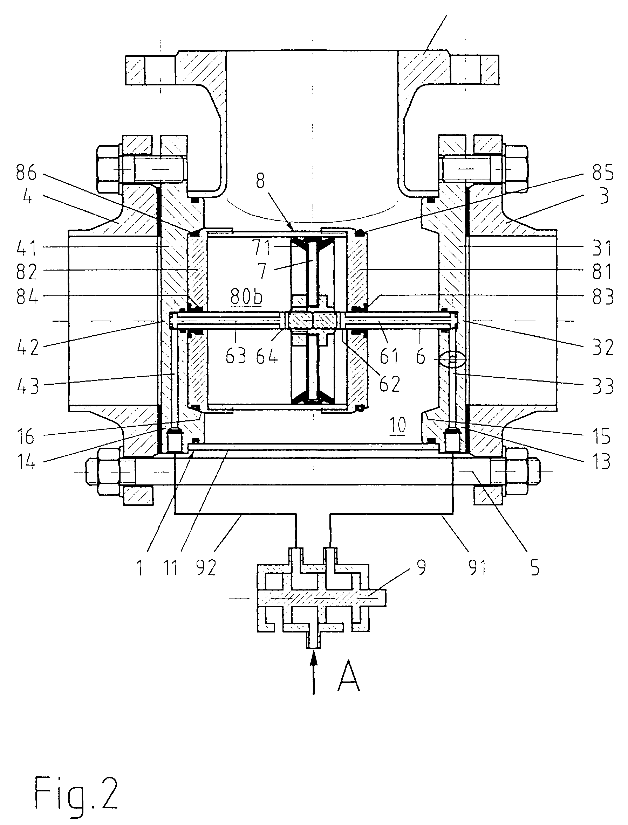

Die Wirkungsweise dieses Ventiles ist wie folgt:
Soferne sich das Steuerventil 9 in der in Fig. 1 gezeichneten Stellung befindet, strömt in dieses ein Druckmedium, z.B. Druckluft, welche in Richtung des Pfeiles A zugeführt wird, durch die Leitung 91 und durch die Kanäle 33, 61 und 62 in den Innenraum 80a ein, wodurch der Ventilkörper 8 in die in Fig. 1 gezeichnete Stellung verschoben wird. Hierdurch wird die Zuleitung zum Rohrstutzen 3 abgesperrt und gelangt ein Medium, z.B Wasser, welches durch eine an den Stutzen 2 angeschlossene Leitung zugeführt wird, in eine an den Stutzen 4 angeschlossene Leitung.
Soferne demgegenüber das Steuerventil 9 in die in Fig. 2 gezeigte Stellung verschoben wird, wird das Druckmedium über die Leitung 92 und durch die Kanäle 43, 63 und 64 hindurch in den Teilraum 80b geleitet, wodurch der Ventilkörper 8 in die in Fig. 2 gezeigte Stellung verschoben wird. Hierdurch wird die an den Anschlußstutzen 2 angeschlossene Leitung mit der an den Stutzen 3 angeschlossenen Leitung verbunden.

Es sind zudem auch jegliche Zwischenstellungen des Ventilkörpers 8 möglich, wodurch die an den Stutzen 2 angeschlossene Leitung mit beiden an die Stutzen 3 und 4 angeschlossenen Leitungen verbunden ist. Hierbei kann eine Steuerung des Zuflusses in diese beiden Leitungen vorgenommen werden. Weiters kann die Strömung des Mediums auch von den an die Stutzen 3 und 4 angeschlossenen Leitungen in die an den Stutzen 2 angeschlossene Leitung erfolgen.

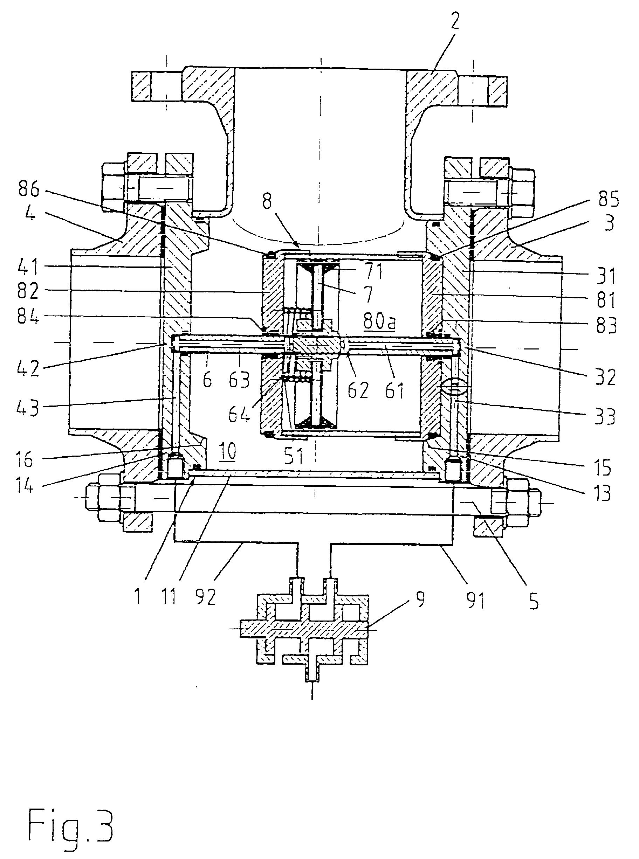

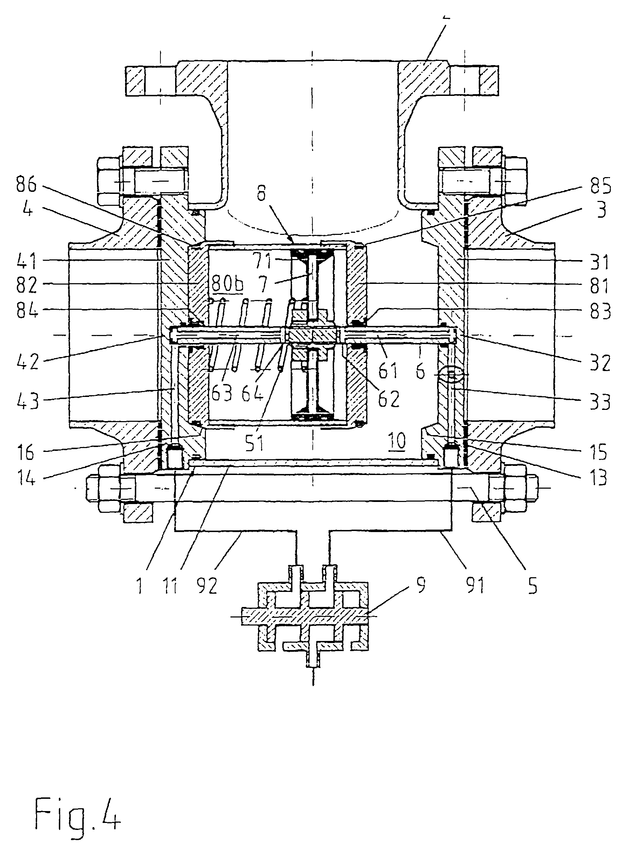

Bei der in Fig. 3 dargestellten Ausführungsform befindet sich im Teilbereich 80b des Ventilkörpers 8 eine Schraubendruckfeder 51, durch welche der Ventilkörper 8, dann, wenn in dessen Innenräume kein Druckmedium eingeleitet wird, immer in die in Fig. 4 gezeichnete Stellung bewegt wird, wodurch die an den Stutzen 3 angeschlossene Leitung mit der an den Stutzen 2 angeschlossenen Leitung verbunden ist. Hierdurch wird in einem Betriebsfall, daß kein Druckmedium zugeführt wird, eine bestimmte Stellung des Ventilkörpers gewährleistet.

Ein derartiges Ventil kann für die Steuerung der Strömung von Wasser in Wasseraufbereitungsanlagen zur Entkalkung von Wasser eingesetzt werden, wobei eine Umschaltung der Zuleitung zwischen zwei Ionentauschern erfolgen muß, da einer derselben zur Entkalkung dient und gleichzeitig der andere regeneriert wird. Ebenso kann ein derartiges Ventil in einer Anlage zur Aufbereitung, z. B. Filterung von Badewasser, eingesetzt werden, wobei das aus einem Schwimmbecken abgepumpte Wasser entweder einer Filteranlage zugeführt oder in den Kanal abgeleitet wird.

Da für diese beiden Funktionen des Ventiles nur ein einziges Gehäuse und ein einziger Antrieb erforderlich sind, wird durch ein derartiges Ventil eine wesentliche Ersparnis bewirkt.

Das Druckmedium kann durch Druckluft, durch Wasser, durch Öl oder durch das geförderte Medium selbst gebildet sein.

## Patentansprüche

1. Dreiwegeventil bestehend aus einem Gehäuse, welches mit drei Anschlußstutzen ausgebildet ist und in welchem sich ein Ventilkörper befindet, welcher gegenüber zwei Ventilsitzen verstellbar ist, wobei durch dessen Verstellung die durch einen ersten Anschlußstutzen gebildete Leitung mit zumindest einer der durch die beiden anderen Anschlußstutzen gebildeten Leitungen verbindbar ist, dadurch gekennzeichnet, daß der Ventilkörper als Hohlkörper [8] ausgebildet ist, welcher längs einer Führungsschiene [6] verstellbar ist und dessen Innenraum mittels einer fest angeordneten Trennwand [7] in zwei Bereiche [80a, 80b] unterteilt ist, in welche Leitungen [62, 63] für ein Druckmedium münden, wobei der Hohlkörper [8] durch Zufuhr von Druckmedium in einen der beiden Teilbereiche [80a, 80b] längs der Führungsschiene [6] gegenüber den Ventilsitzen verstellbar ist.

2. Dreiwegeventil nach Patentanspruch 1, dadurch gekennzeichnet, daß der Hohlkörper als an seinen beiden axialen Enden durch Deckwände [81, 82] verschlossener Hohlzylinder [8] ausgebildet ist.

3. Dreiwegeventil nach einem der Patentansprüche 1 und 2, dadurch gekennzeichnet, daß die Führungsschiene als insbesondere zylindrische Stange [6] ausgebildet ist, welche den Hohlkörper [8] in gegenüber der Stange [6] abgedichteten Öffnungen durchsetzt.

4. Dreiwegeventil nach einem der Patentansprüche 1 bis 3, dadurch gekennzeichnet, daß die Führungsschiene, insbesondere die zylindrische Führungsstange [6], den zylindrischen Hohlkörper [8] axial durchsetzt.

5. Dreiwegeventil nach einem der Patentansprüche 1 bis 4, dadurch gekennzeichnet, daß die Trennwand [7] auf der Führungsschiene [6] befestigt ist.

6. Dreiwegenventil nach einem der Patentansprüche 2 bis 5, dadurch gekennzeichnet, daß die Trennwand [7] als kreisrunde Scheibe ausgebildet ist, welche an der Führungsschiene [6] befestigt ist und welche an ihrem Umfang mit einer Dichtung [71] ausgebildet ist, welche an die Innenwand des insbesondere zylindrischen Hohlkörpers [8] anliegt.

7. Dreiwegeventil nach einem der Patentansprüche 1 bis 6, dadurch gekennzeichnet, daß die Leitungen für die Zufuhr des Druckmediums in die Teilbereiche [80a, 80b] des Hohlkörpers [8] in der Führungsschiene [6] angeordnet sind.

8. Dreiwegenventil nach einem der Patentansprüche 1 bis 7, dadurch gekennzeichnet, daß die Führungsschiene [6] von in den Ventilöffnungen angeordneten Speichen [31, 41] getragen ist, wobei die Leitungen [33, 43] für das Druckmedium in jeweils einer der Speichen [31, 41] angeordnet sind und in die in der Führungsschiene [6] befindlichen Leitungen [61, 63] übergehen.

9. Dreiwegeventil nach Patentanspruch 8, dadurch gekennzeichnet, daß jeweils eine der Speichen [31, 41] und die Führungsschiene [6] mit aneinander anschließenden Bohrungen [32, 61; 42, 62] ausgebildet sind, über welche das Druckmedium mittels eines Steuerventiles [9] jeweils einem der beiden Teilbereiche [80a, 80b] zuführbar ist.

10. Dreiwegenventil nach einem der Patentansprüche 1 bis 9, dadurch gekennzeichnet, daß in einem der Teilbereiche [80b] des Innenraumes des Hohlkörpers [8] eine Rückstellfeder [51] angeordnet ist, wodurch nach Abschaltung des Druckmediums der Ventilkörper [8] in eine seiner beiden Endlagen verstellbar ist.

11. Dreiwegeventil nach einem der Patentansprüche 1 bis 10, dadurch gekennzeichnet, daß die Beaufschlagung der Leitungen zur Zufuhr des Druckmediums in einen der beiden Teilbereiche [80a, 80b] mittels eines Steuerventiles [9] bewirkbar ist.

12. Dreiwegeventil nach einem der Patentansprüche 1 bis 11, dadurch gekennzeichnet, daß das Druckmedium durch Druckluft oder durch Wasser gebildet ist.

13. Dreiwegeventil nach einem der Patentansprüche 1 bis 12, dadurch gekennzeichnet, daß die Ventilöffnungen der beiden weiteren Anschlußstutzen mit einer Mehrzahl von Speichen [31, 41] ausgebildet sind, von deren mittig angeordneten Naben [32, 42] die Führungstange [6] getragen ist, daß die Trennwand [7] an der Führungsstange [6] befestigt ist, daß die beiden Deckwände [81, 82] des zylindrischen Hohlkörpers [8] von der Führungsstange [6] gegenüber dem Druckmedium abgedichtet durchsetzt sind und daß das Druckmedium über in jeweils einer der Speichen [31, 41] und in der Führungsstange [6] angeordnete Leitungen [61, 62, 63, 64] in die durch die Trennwand [7] gebildeten beiden Teilbereiche [80a, 80b] des Innenraumes zuleitbar ist, wodurch der Hohlkörper [8] gegenüber den beiden Ventilsitzen verstellbar ist.
